# EUROPEAN PATENT SPECIFICATION

(11) **EP 1 944 518 B1**
(45) Date of publication and mention of the grant of the patent: **31.07.2013**
(21) Application number: 06811041.0
(22) Date of filing: 02.10.2006
(51) Int. Cl.: F16C 33/58, B60B 35/18, F16C 19/18, F16C 33/64

(54) **BEARING DEVICE FOR WHEEL**
LAGERVORRICHTUNG FÜR RAD
DISPOSITIF A PALIER POUR ROUE

(30) Priority: 30.09.2005 JP 2005287267; 21.10.2005 JP 2005306888; 21.10.2005 JP 2005306889; 27.10.2005 JP 2005313155; 31.10.2005 JP 2005316053; 07.08.2006 JP 2006214124
(43) Date of publication of application: 16.07.2008
(73) Proprietor: NTN Corporation, Osaka-shi, Osaka 550-0003 (JP)
(72) Inventor: KOMORI, Kazuo, Iwata-shi Shizuoka 438-8510 (JP); KIUCHI, Masahiro, Iwata-shi Shizuoka 438-8510 (JP); BABA, Kazuhiro, Iwata-shi Shizuoka 438-8510 (JP)
(74) Representative: Cohausz & Florack
(86) International application number: PCT/JP2006/319693
(87) International publication number: WO 2007/037477

(56) References cited:
- EP-A1- 1 548 307
- WO-A-2004/022992
- JP-A- 11 062 985
- JP-A- 2000 071 705
- JP-A- 2000 110 839
- JP-A- 2000 110 839
- JP-A- 2004 052 784
- JP-A- 2004 052 784
- JP-A- 2004 100 754
- JP-A- 2004 108 449
- JP-A- 2004 108 449
- JP-A- 2005 140 181
- JP-A- 2005 140 181
- US-A- 5 501 530
- US-A1- 2001 007 600
- US-A1- 2002 121 020
- US-A1- 2005 111 771
- SKF: 'SKF Explorer Angular Contact BAll Bearings', [Online] 2003, Retrieved from the Internet: <URL:http://www.skf.com/files/239445.pdf> [retrieved on 2011-04-05]
- H. KÖTTRITSCH: 'A new performance class for angular contact ball bearings', [Online] 16 May 2002, SKF Evolution magazine Retrieved from the Internet: <URL:http://evolution.skf.com/zino.aspx?art icleID=408> [retrieved on 2011-04-05]

## Description

### BACKGROUND OF THE INVENTION

### Field of the Invention

The present invention relates to a bearing apparatus for freely rotatably supporting a wheel of vehicle, and more particularly to a bearing apparatus for a wheel of vehicle which can suppress damages from being caused on balls (i.e. ball damage) of the bearing apparatus during its assembly and thus to improve noise characteristics of the bearing apparatus and can simultaneously satisfy the high rigidity and light weight of the bearing apparatus.

### Description of Background Art

In usual, the bearing apparatus for a wheel of vehicle is adapted to freely rotatably support a hub wheel for mounting the wheel via a rolling bearing and it is adopted an inner ring rotation type for a driving wheel and both inner ring rotation and outer ring rotation types for a driven wheel. A double row angular ball bearing is widely used in such a bearing apparatus from reasons that it has a desirable bearing rigidity, high durability against misalignment and small rotation torque required for fuel consumption. The double row angular contact ball bearing has a plurality of balls interposed between a stationary ring and a rotational ring and the balls are contacted with the stationary and rotational rings with being applied a predetermined contact angle.

The bearing apparatus for a wheel of vehicle is broadly classified to a structure of first generation in which a wheel bearing of double row angular contact ball bearing is fitted between a knuckle forming part of a suspension and a hub wheel, a structure of second generation in which a body mounting flange or a wheel mounting flange is directly formed on the outer circumferential surface of an outer member, a structure of third generation in which one of the inner raceway surfaces is directly formed on the outer circumferential surface of the hub wheel, and a structure of fourth generation in which the inner raceway surfaces are directly formed on the outer circumferential surfaces of the hub wheel and the constant velocity universal joint.

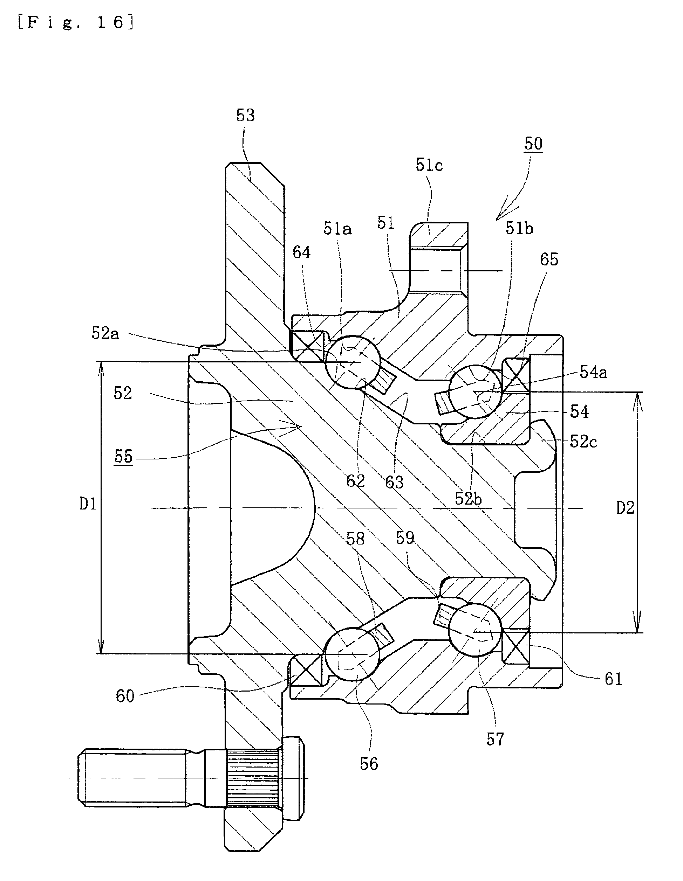

In the wheel bearing apparatus of the prior art since the both bearing row arrangements in double row bearing are same, although it has a sufficient rigidity during the straight way running optimum rigidity cannot always obtained during the curved way running. That is, positional relation between wheels and the bearing apparatus is usually designed so that the weight of a vehicle acts on substantially middle between the rows of bearing balls during the straight way running, but a larger radial load and a larger axial load are applied to axles of vehicle of the side opposite to a curving direction (i.e. axles of the left hand side of vehicle when right hand curving). Accordingly it is effective to have a larger rigidity of the bearing row of outer side than that of the bearing row of inner side in order to improve the durability and strength of the bearing apparatus. Thus it is known a bearing apparatus for a wheel of vehicle shown in Fig. 16 which can have a high rigidity without enlargement of the bearing apparatus.

The bearing apparatus for a wheel of vehicle 50 is formed by a double row angular ball bearing comprising an outer member 51 integrally formed on its outer circumferential surface with a body mounting flange to be mounted on a knuckle (not shown) of a vehicle and on its inner circumferential surface with double row outer raceway surfaces 51a, 51b; an inner member 55 including a hub wheel 52 having a wheel mounting flange 53 integrally formed one end thereof for mounting a wheel (not shown), one inner raceway surface 52a formed on the outer circumferential surface thereof oppositely to one 51a of the double row outer raceway surfaces 51a, 51b, and a cylindrical portion 52b axially extending from the inner raceway surface 52a, and further including an inner ring 54 fitted on the cylindrical portion 52b and formed on its outer circumferential surface with the other inner raceway surface 54a oppositely to the other raceway surface 51b of the double row outer raceway surfaces 51a, 51b; double row ball groups 56, 57 freely rollably contained between the outer raceway surfaces 51a, 51b and inner raceway surfaces 52a, 54a of the inner member 55, and cages 58, 59 for rollably holding the ball groups 56, 57.

The inner ring 54 is axially immovably secured by a caulked portion 52c formed by plastically deforming the cylindrical portion 52b of the hub wheel 52 radially outward. Seals 60, 61 are mounted in annular openings formed between the outer member 51 and the inner member 55 to prevent leakage of grease contained within the bearing apparatus and entering of rain water or dusts into the bearing apparatus from the outside.

A pitch circle diameter D1 of the outer side ball group 56 is set larger than a pitch circle diameter D2 of the inner side ball group 57. Accordingly the diameter of the inner raceway surface 52a of the hub wheel 52 is larger than that of the inner raceway surface 54a of the inner ring 54 as well as the outer raceway surface 51a of the outer side of the outer member 51 is larger than that of the outer raceway surface 51b of the inner side of the outer member 51. Also the number of outer side balls 56 is larger than that of the inner side balls 57. By setting that the pitch circle diameter D1 of the outer side is larder than the pitch circle diameter D2 of the inner side (D1>D2), it is possible to obtain a large rigidity of the bearing apparatus 50 and thus to extend the life thereof see Japanese Laid-open Patent Publication No. 108449/2004).

### SUMMARY OF THE INVENTION

### Disclosure of the Invention

### Problems to be solved by the Invention

However in such a bearing apparatus for a wheel of vehicle 50 the prior art, since the outer side end portion of the hub wheel 52 is enlarged the weight of the bearing apparatus is also increased. Accordingly although the bearing apparatus of the prior art can increase its rigidity it has one defect of increasing its weight.

Also in the bearing apparatus 50 of the prior art, a stepped portion 63 of the hub wheel 52 is formed between the inner raceway surface 52a of the outer side and the cylindrical portion 52b on which the inner ring 54 is press fitted. The presence of the stepped portion 63 (height of step: (D1-D2)/2) causes a problem that the balls 56 of the outer side temporary assembled in the outer raceway surface 51a of the outer member 51 tends to contact the counter portion 62 of the inner raceway surface 52a and the stepped portion 63 of the hub wheel 52 and to be damaged by them during assembly of the bearing apparatus 50.

In addition there is a problem that micro damages would be caused on the surfaces of the ball groups 56, 57 during temporary assembly of them held by the cages 58, 59 into the double row outer raceway surfaces 51a, 51b of the outer member 51. That is, these micro damages (ball damages) are often caused since the balls 56, 57 are inserted into the inner circumferential surfaces of the counter portions 64, 65 of the outer raceway surfaces 51a, 51b with being abraded by corners or irregular turned surfaces of the counter portions 64, 65. The damaged surfaces of the balls 56, 57 cause noise of the bearing apparatus and reduce the life of the bearing apparatus. Accordingly very careful assembling work is required and this reduces assembling efficiency of the bearing apparatus.

It is, therefore, an object of the present invention to provide a bearing apparatus for a wheel of vehicle which can simultaneously solve the antinomic problems of reducing the weight and size of the bearing apparatus and of increasing the rigidity of the bearing apparatus.

Another object of the present invention is to suppress generation of the ball damages during assembly of the bearing apparatus and to extend the life of the bearing apparatus. Means for solving the problems

For achieving the object of the present invention, there is provided a double row angular contact ball bearing apparatus for a wheel of vehicle comprising an outer member formed on its inner circumferential surface with double row outer raceway surfaces; inner members each formed on its outer circumferential surface with double row inner raceway surfaces oppositely arranged to the double row outer raceway surfaces; and double row ball groups freely rollably contained between the outer raceway surfaces and inner raceway surfaces of the inner members and the outer member, wherein a pitch circle diameter of a ball group of the outer side is larger than a pitch circle diameter of a ball group of the inner side, characterized in that each of corners of shoulders of the outer and inner raceway surfaces is rounded as a smooth circular arc; that chamfered dimensions of the corner portion of the shoulder is set in a range 0.15mm - 0.8mm; that the corner radius is set in a range 0.15mm - 2.0mm, wherein the transition portion is smoothly formed; and that counter portions of the outer raceway surfaces are opposing the shoulders of the inner raceway surfaces and are rounded as a smooth circular arc and the surface roughness of inner circumferential surface is limited less than 3.2 µm Ra (claim 1) .

According to the present invention of claim 1, since a pitch circle diameter of a ball group of the outer side is larger than a pitch circle diameter of a ball group of the inner side, and each of corners of shoulders of the outer and inner raceway surfaces is rounded as a smooth circular arc, it is possible to suppress generation of the ball damage during assembly of the bearing apparatus and to extend the life of the bearing apparatus.

There is provided a bearing apparatus not forming part of the invention for a wheel of vehicle comprising an outer member formed on its inner circumferential surface with double row outer raceway surfaces; an inner member including a hub wheel having a wheel mounting formed integrally therewith at one end thereof, one inner raceway surface formed on the outer circumferential surface thereof oppositely to one of the double row outer raceway surfaces, and a cylindrical portion axially extending from the inner raceway surface, and further including an inner ring fitted on the cylindrical portion and formed on its outer circumferential surface with the other inner raceway surface oppositely to the other raceway surface of the double row outer raceway surfaces; and double row ball groups freely rollably contained between the outer raceway surfaces and inner raceway surfaces of the inner members and the outer member wherein a pitch circle diameter of a ball group of the outer side is larger than a pitch circle diameter of a ball group of the inner side, and that a substantially conical recess is formed at an outer side end portion of the hub wheel, and the depth of the recess extends to at least near the bottom of the inner raceway surface of the hub wheel so that the outer side end portion of the hub wheel has a substantially constant wall thickness.

Since a pitch circle diameter of a ball group of the outer side is larger than a pitch circle diameter of a ball group of the inner side, and a substantially conical recess is formed at an outer side end portion of the hub wheel, and the depth of the recess extends to at least near the bottom of the inner raceway surface of the hub wheel so that the outer side end portion of the hub wheel has a substantially constant wall thickness, it is possible to provide a bearing apparatus for a wheel of vehicle which can simultaneously solve the antinomic problems of reducing the weight and size of the bearing apparatus and of increasing the rigidity of the bearing apparatus.

It is possible that a shaft shaped portion is formed so that it extends from the bottom of the inner raceway surface of the hub wheel toward the cylindrical portion, and a tapered stepped portion is formed between the shaft shaped portion and a shoulder to which the inner ring is abutted, and wherein the depth of the recess extends to near the stepped portion beyond the bottom of the inner raceway surface. This enables to further reduce the weight of the bearing apparatus.

It is possible that a wall thickness of the hub wheel in a direction of ball contact angle at the inner raceway surface is larger than a wall thickness of the hub wheel at the bottom of the inner raceway surface. This enables to keep the rigidity of the hub wheel and to further reduce the weight of the bearing apparatus.

It is possible that a predetermined hardened layer is continuously formed by high frequency induction quenching in a region from the base of the wheel mounting flange to the cylindrical portion including the inner raceway surface of the hub wheel. This makes it possible to improve the strength and durability of the hub wheel.

It is possible the thickness of the outer side end of the hub wheel is set more than twice the depth of the hardened layer. This enables to prevent the quenching crack and thus to improve the strength and rigidity of the hub wheel.

It is possible that a wall thickness of the hub wheel in a direction of ball contact angle at the inner raceway surface is set at a range 0. 2 ∼ 0. 3 of the diameter of the ball contact point. This makes it possible to achieve reduction of the weight of the bearing apparatus with keeping the strength and rigidity of the hub wheel in accordance with conditions of use.

According to the present invention of claim 1, counter portions of the outer raceway surfaces are opposing the shoulders of the inner raceway surfaces and are rounded as a smooth circular arc and the surface roughness of inner circumferential surface is limited less than 3.2 µm Ra. This makes it possible to suppress the ball contact damages caused during assembly of the bearing apparatus and the gouge caused by ball vibration and thus to improve the noise characteristics and quality of the bearing apparatus.

According to a method of manufacturing a bearing apparatus for a wheel of vehicle forming part of the invention, the corner portion of the shoulder or the inner circumferential surface of the counter portion of each inner and outer raceway surface is ground simultaneously with the inner and outer raceway surface after heat treatment by a formed grinding wheel (claim 4). This enables the transition portion smoother.

According to the present invention of claim 1, chamfered dimensions of the corner portion of the shoulder is set in a range 0.15mm-0.8mm, and the corner radius is set in a range 0.15mm-2.0mm, and that the transition portion is smoothly formed. This makes it possible to prevent the balls from being scratched and the oval contact region of each ball from running-over the counter portion and coming-out from the inner raceway surface.

It is preferable that a ratio (d/PCDi) of the outer diameter (d) of each ball to a pitch circle diameter (PCDi) of a ball group away from the wheel mounting flange is set in a range 0.14 ≤ (d/PCDi) ≤ 0.25 (claim 2). This enables to extend the life of the bearing apparatus with maintaining its high rigidity.

It is also preferable that the outer diameter of each ball is same, and the number of ball group near a wheel mounting flange is larger than that of a ball group away from the wheel mounting flange (claim 3). This also enables to extend the life of the bearing apparatus with maintaining its high rigidity.

### [One mode for carrying out the invention]

One mode for carrying out the present invention is a double row angular contact ball bearing apparatus according to claim 1 for a wheel of vehicle comprising an outer member formed on its outer circumferential surface with a body mounting flange to be mounted on a knuckle of a vehicle and on its inner circumferential surface with double row outer raceway surfaces; an inner member including a hub wheel having a wheel mounting formed integrally therewith at one end thereof, one inner raceway surface formed on the outer circumferential surface thereof oppositely to one of the double row outer raceway surfaces, and a cylindrical portion axially extending from the inner raceway surface, and further including an inner ring fitted on the cylindrical portion and formed on its outer circumferential surface with the other inner raceway surface oppositely to the other raceway surface of the double row outer raceway surfaces; and double row ball groups freely rollably contained between the outer raceway surfaces and inner raceway surfaces of the inner members and the outer member; the outer diameter of each ball being same, and the number of ball group of the outer side being larger than that of a ball group of the inner side, wherein the corner portion of the shoulder or the inner circumferential surface of the counter portion of each inner and outer raceway surface is ground simultaneously with the inner and outer raceway surface after heat treatment by a formed grinding and rounded as a smooth circular arc, and that a substantially conical recess is formed at an outer side end portion of the hub wheel, and the depth of the recess extends to at least near the bottom of the inner raceway surface of the hub wheel so that the outer side end portion of the hub wheel has a substantially constant wall thickness.

### BRIEF DESCRIPTION OF THE DRAWINGS

Additional advantages and features of the present invention will become apparent from the subsequent description and the appended claims, taken in conjunction with the accompanying drawings, wherein:
- Fig. 1: is a longitudinal section view showing a first embodiment of the bearing apparatus for a wheel of vehicle of the present invention;
- Fig. 2: is an enlarged sectional view of the bearing row of outer side of Fig. 1;
- Fig. 3: is an enlarged sectional view of the bearing row of inner side of Fig. 1;
- Fig. 4: is an explanatory view showing a grinding work applied to the outer member after heat treatment thereof;
- Fig. 5: (a) is an explanatory view showing a grinding work applied to the hub wheel after heat treatment thereof, and Fig. 5(b) is an explanatory view showing a grinding work applied to the inner ring after heat treatment thereof;
- Fig. 6: is a longitudinal section view showing a second embodiment of the bearing apparatus for a wheel of vehicle of the present invention;
- Fig. 7: is an enlarged sectional view of the bearing row of outer side of Fig. 6;
- Fig. 8: is an enlarged sectional view of the bearing row of inner side of Fig. 6;
- Fig. 9: is an explanatory view showing a grinding work applied to the outer member after heat treatment thereof;
- Fig. 10: (a) is an explanatory view showing a grinding work applied to the hub wheel after heat treatment thereof, and Fig. 10 (b) is an explanatory view showing a grinding work applied to the inner ring after heat treatment thereof;
- Fig. 11: is a longitudinal section view showing a third embodiment of the bearing apparatus for a wheel of vehicle of the present invention;
- Fig. 12: is a longitudinal section view showing a fourth embodiment of the bearing apparatus for a wheel of vehicle of the present invention;
- Fig. 13: is an enlarged view of the hub wheel of Fig. 12;
- Fig. 14: is a longitudinal section view showing a fifth embodiment of the bearing apparatus for a wheel of vehicle of the present invention;
- Fig. 15: is an enlarged view of the hub wheel of Fig. 14; and
- Fig. 16: is a longitudinal section view showing a bearing apparatus for a wheel of vehicle of the prior art.

### DESCRIPTION OF THE PREFERRED EMBODIMENTS

### First embodiment

Preferable embodiments of the present invention will be hereinafter described with reference to the drawings.

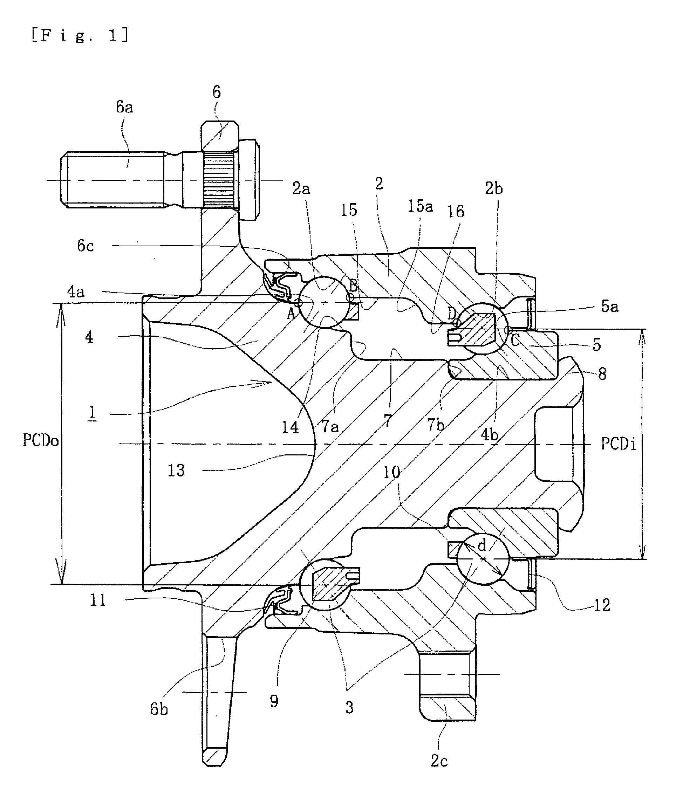

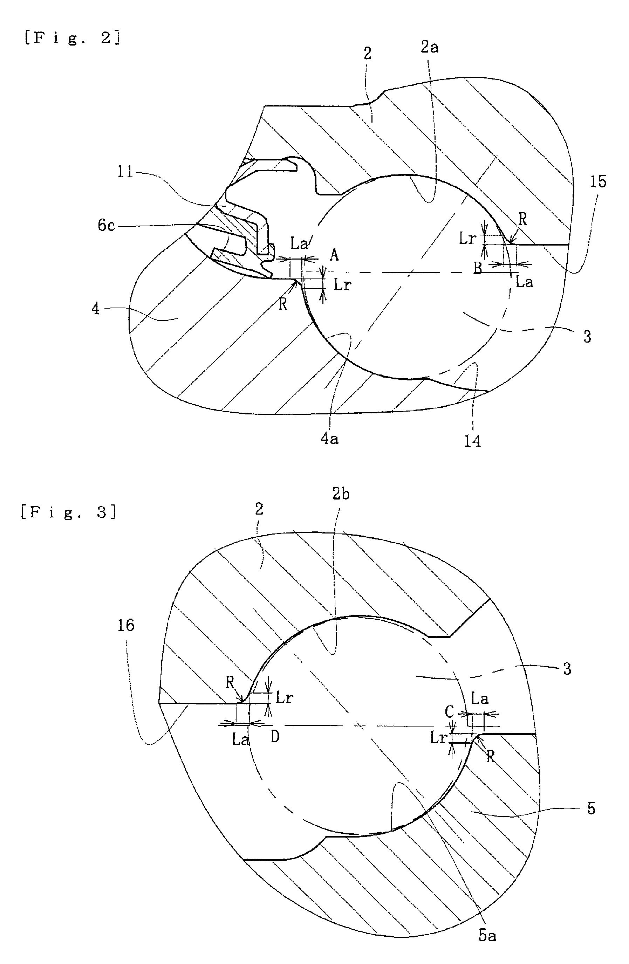

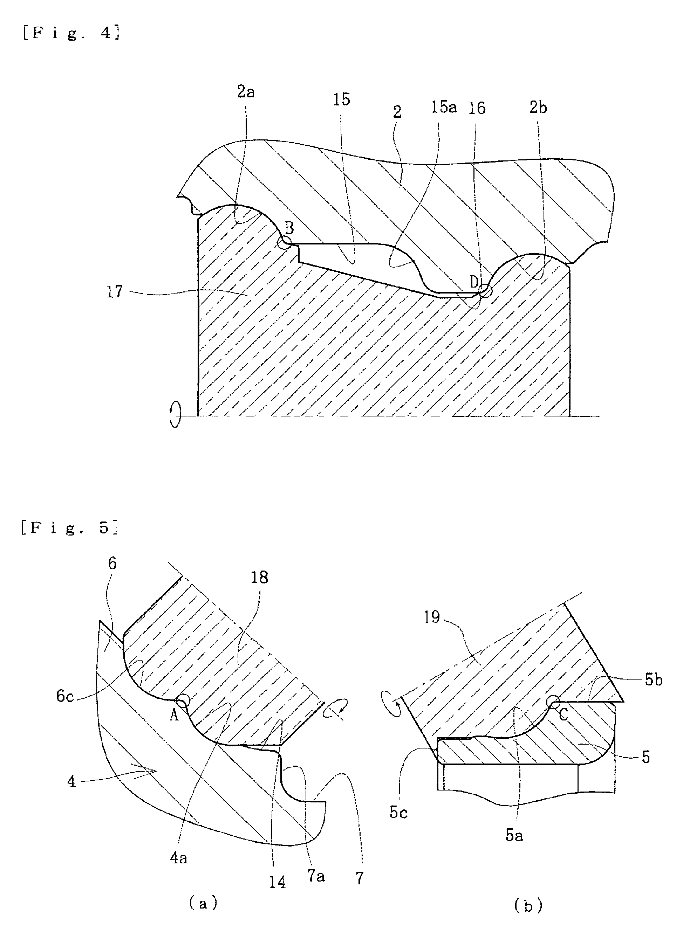

Fig. 1 is a longitudinal section view showing a first embodiment of the bearing apparatus for a wheel of vehicle of the present invention, Fig. 2 is an enlarged sectional view of the bearing row of outer side of Fig. 1, Fig. 3 is an enlarged sectional view of the bearing row of inner side of Fig. 1, Fig. 4 is an explanatory view showing a grinding work applied to the outer member after heat treatment thereof, Fig. 5 (a) is an explanatory view showing a grinding work applied to the hub wheel after heat treatment thereof, and Fig. 5 (b) is an explanatory view showing a grinding work applied to the inner ring after heat treatment thereof. In the description below, a term "outer side" (left hand side in the drawings) of the apparatus denotes a side which is positioned outside of the vehicle body and a term "inner side" (right hand side in the drawings) of the apparatus denotes a side which is positioned inside of the body when the bearing apparatus is mounted on the vehicle body.

The bearing apparatus for a wheel of vehicle of the present invention shown in Fig. 1 is a third generation type used for a driven wheel and comprises an inner member 1, an outer member 2, and double rows of ball groups 3, 3 for rollably contained between the inner and outer members 1, 2. The inner member comprises the hub wheel 4 and an inner ring 5 press fitted on the hub wheel with a predetermined interference.

The hub wheel 4 is integrally formed with a wheel mounting flange 6 at its one end, one (outer side) inner raceway surface 4a on the outer circumferential surface, and a cylindrical portion 4b extending from the inner raceway surface 4a through a shaft shaped portion 7. Hub bolts 6a are arranged on the wheel mounting flange 6 equidistantly along the periphery of the wheel mounting flange 6 and circular apertures 6b are formed between the hub bolts 6a. These circular apertures 6b contribute not only to reduction of the weight of the bearing apparatus but to passage of any fastening tool used for assembly and disassembly of the bearing apparatus.

The inner ring 5 is formed on its outer circumferential surface with the other (inner side) inner raceway surface 5a and adapted to be press fitted on the cylindrical portion 4b of the hub wheel 4 with a predetermined interference and to be axially secured by a caulked portion 8 formed by plastically deforming the end of the cylindrical portion 4b.

The hub wheel 4 is made of medium carbon steel including carbon of 0.40 ∼ 0.80% by weight such as S53C and hardened by high frequency induction quenching so that a region including the inner raceway surface 4a from the inner side base 6c of the wheel mounting flange 6 to the cylindrical portion 4b has surface hardness of 58-64 HRC. The caulked portion 8 is remained as its surface hardness after forging. Accordingly the wheel mounting flange 6 has a sufficient mechanical strength against the rotary bending load applied thereto and the anti-fretting strength of the cylindrical portion 4b at a region press fitted by the inner ring 5 can be improved and the plastically deforming working of the caulked portion 8 can be also carried out without any micro crack. The inner ring 5and the balls 3 are made of high carbon chrome bearing such as SUJ 2 and hardened to their core by dipping quenching as having hardness of 58-64 HRC.

The outer member 2 is integrally formed on its outer circumferential surface with a body mounting flange 2c to be mounted on a knuckle (not shown) of a vehicle and on its inner circumferential surface with an outer side outer raceway surface 2a opposite to the inner raceway surface 4a of the hub wheel 4 and an inner side outer raceway surface 2b opposite to the inner raceway surface 5a of the inner ring 5. Double rows of ball groups 3, 3 are contained between these outer and inner raceway surfaces and rollably held by cages 9, 10. The outer member 2 is made of medium carbon steel including carbon of 0.40∼0.80% by weight such as S53C and the double row outer raceway surfaces 2a, 2b are hardened by high frequency induction quenching so as to have a surface hardness of 58∼64 HRC.

A seal 11 is mounted within an outer side end portion of an annular space formed between the outer member 2 and the inner member 1 and a magnetic encoder 12 is mounted within an inner side end of the annular space for detecting the rotational speed of wheel. The seal 11 and a cap (not shown) covering the opened end of the outer member 2 prevent leakage of grease contained in the bearing and entering of rain water and dusts into the bearing from outside. Although the structure shown here is that of third generation bearing, the bearing apparatus of the present invention can be applied to the structures of bearing of the first, second and fourth generation.

As shown in Fig. 1 a pitch circle diameter PCDo of the outer side ball group 3 is set larger than a pitch circle diameter PCDi of the inner side ball group 3 (PCDo>PCDi). The diameter "d" of each ball 3 is same both in the outer side and inner side and thus the number of the ball group 3 in the outer side is larger than that of the ball group 3 in the inner side because of the fact PCDo>PCDi.

A substantially conical recess 13 is formed at an outer side end portion of the hub wheel 4 and the depth of the recess 13 extends to near the bottom of the inner raceway surface 4a of the hub wheel 4 so that outer side end portion of the hub wheel 4 has a substantially constant wall thickness. As clearly shown in Fig. 1 the outline configuration of the hub wheel 4 is gradually reduced from the inner raceway surface 4a to the cylindrical portion 4b via the counter portion 14, a stepped portion 7a, the shaft shaped portion having a smaller diameter, and a shoulder portion 7b to which the inner ring 5 is abutted. Due to the fact PCDo>PCDi, the diameter of the inner raceway surface 4a of the hub wheel 4 is larger than that of the inner raceway surface 5a of the inner ring 5 and the outer diameter of the shaft shaped portion 7 is set so that it has substantially same diameter as the bottom diameter of the inner raceway surface 5a of the inner ring 5.

On the other hand, in the outer member 2, due to the fact PCDo > PCDi, the diameter of the outer side outer raceway surface 2a is larger than that of the inner side outer raceway surface 2b. The outer side outer raceway surface 2a continues to the inner side outer raceway surface 2b via a cylindrical shoulder 15, a stepped portion 15a and a shoulder 16 of a smaller diameter. The inner diameter of the bottom of the outer raceway surface 2b is set so that it has substantially same diameter as the inner diameter of the shoulder 15 of a larger diameter.

In the bearing apparatus for a wheel of vehicle having such a structure, since the pitch circle diameter PCDo of the outer side ball group 3 is larger than the pitch circle diameter PCDi of the inner side ball group 3 and the number of the outer side ball group 3 is also larger than that of the inner side ball group 3, the rigidity of the bearing apparatus at the outer side can be increased and thus the life of the bearing apparatus can be extended. In addition a recess 13 is formed at the outer side end portion of the hub wheel 4 so that the wall thickness of the hub wheel 4 at this outer side end portion is substantially constant. This enables to solve the antinomic problems of reducing the weight and size of the bearing apparatus and of increasing the rigidity of the bearing apparatus.

In addition to increase of the bearing rigidity at the outer side, a ratio of the diameter "d" of each ball 3 to the pitch circle diameter PCDi of the inner side ball group 3 (d/PCDi) is set in a predetermined range i.e. 0.14 ≤ (d/PCDi) ≤ 0.25.

In view of the bearing rigidity a smaller diameter "d" of each ball 3 is preferable since a larger number of balls 3 (i.e. a smaller diameter "d") can increase the bearing rigidity in a same pitch circle diameter PCDi. However in view of the life of the bearing apparatus a larger diameter "d" of ball 3 is preferable since the larger diameter "d" of ball 3 reduces the rolling fatigue strength. As a result of the FEM analysis (analysis using an Finite Element Method) of a relation between the pitch circle diameter PCDi and the diameter "d" of ball 3, it has been found that the bearing rigidity cannot be increased when d/PCDi exceeds 0.25, and on the contrary the rolling fatigue strength is lowered when d/PCDi is less than 0.14. Accordingly it is possible to satisfy both the increase of the rigidity and extension of the bearing life by setting the ratio d/PCDi in the range 0.14 ≤ (d/PCDi) ≤ 0.25 in addition to setting the pitch circle diameter PCDo of the outer side ball group 3 larger than the pitch circle diameter PCDi of the inner side ball group 3.

Also in this embodiment each of corners A-D of shoulders of the inner and outer raceway surfaces is rounded as having a smooth circular arc as shown in enlarged views of Figs. 2 and 3. More particularly each corner is formed so that it has the axial chamfer dimension La of 0.15-0.8 mm, preferably 0 .15 ∼ 0 .3 mm, and the radial chamfer dimension Lr of 0.15 ∼ 0.8 mm, preferably 0.15-0.3 mm, and the corner radius R of 0.15 ∼ 2.0 R, preferably 0.45 ∼ 0.7 R in order to have smooth transition portions. When the corner radius R is less than 0.15 R balls 3 would tend to be scratched, on the other hand when the corner radius R exceeds 2.0 R the oval contact region of ball 3 (i.e. oval region formed by an contact area between the ball 3 and the inner raceway surface 4a) would tend to ride over the inner raceway surface 4a and come out from the inner raceway surface 4a.

As shown in Figs. 4 and 5, the corner portion A ∼ D of shoulders of each inner and outer raceway surface is ground simultaneously with them after heat treatment by a formed grinding wheel 17, 18, 19. That is, as shown in Fig. 4, the double row outer raceway surfaces 2a, 2b of the outer member 2 are ground together by the formed grinding wheel 17 and the corners B, D of the shoulders are simultaneously ground by the formed grinding wheel 17. As shown in Fig. 5 (a) the base 6c forming the seal land portion of the wheel mounting flange 6 of the hub wheel 4 and the inner raceway surface 4a are also ground together by the formed grinding wheel 18 and the corner A of the shoulder is simultaneously ground by the formed grinding wheel 18. Furthermore as shown in Fig. 5 (b) the inner raceway surface 5a, the outer circumferential surface 5b on which the magnetic encoder 12 is press fitted and the end face 5c of the inner ring 5 are ground together by the formed grinding wheel 19 and the corner C of the shoulder is simultaneously ground by the formed grinding wheel 19.

As described above since the corners A-D are ground simultaneously ground by the formed grinding wheel 17-19 together with the outer and inner raceway surfaces 2a, 2b, 4a, 5a and thus each of the corners A-D is rounded as a smooth circular arc, it is possible to suppress generation of "edge load" even though the oval contacting region rides over the each corner A-D when a large bending moment is applied to the wheel bearing apparatus. Accordingly it is possible to provide a bearing apparatus for a wheel of vehicle which can simultaneously solve the antinomic problems of reducing the weight and size of the bearing apparatus and of increasing the rigidity of the bearing apparatus. The term "edge load" herein means a large concentrated stress generated in the corners A ∼ D and often causes premature delamination of parts.

Furthermore since the corners A-D of the shoulders of the outer and inner raceway surfaces are rounded as having a circular arc, the balls 30 are not damaged by the corners A-D during the assembling step. Thus it is possible to provide a bearing apparatus for a wheel of vehicle which can improve the noise characteristics as well as the durability thereof.

### Second embodiment

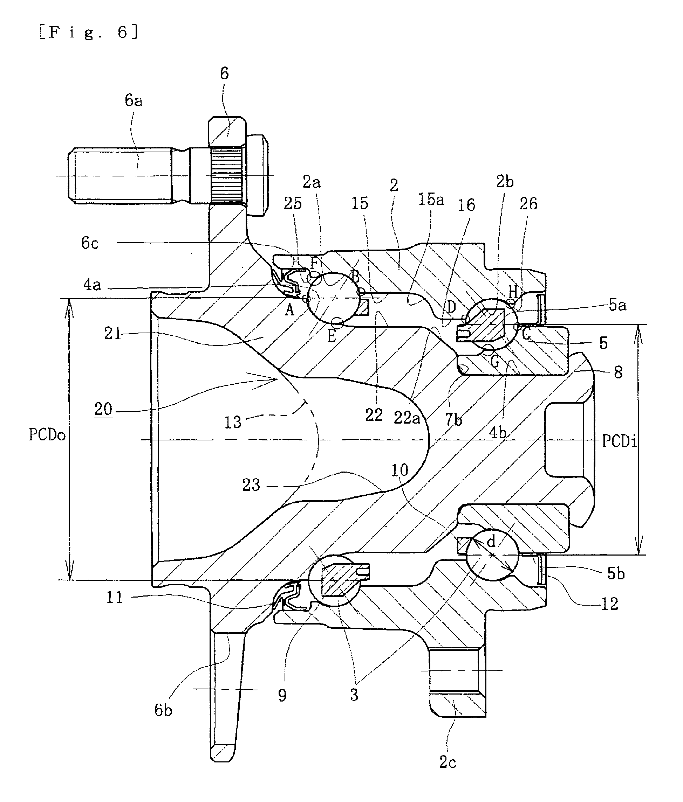

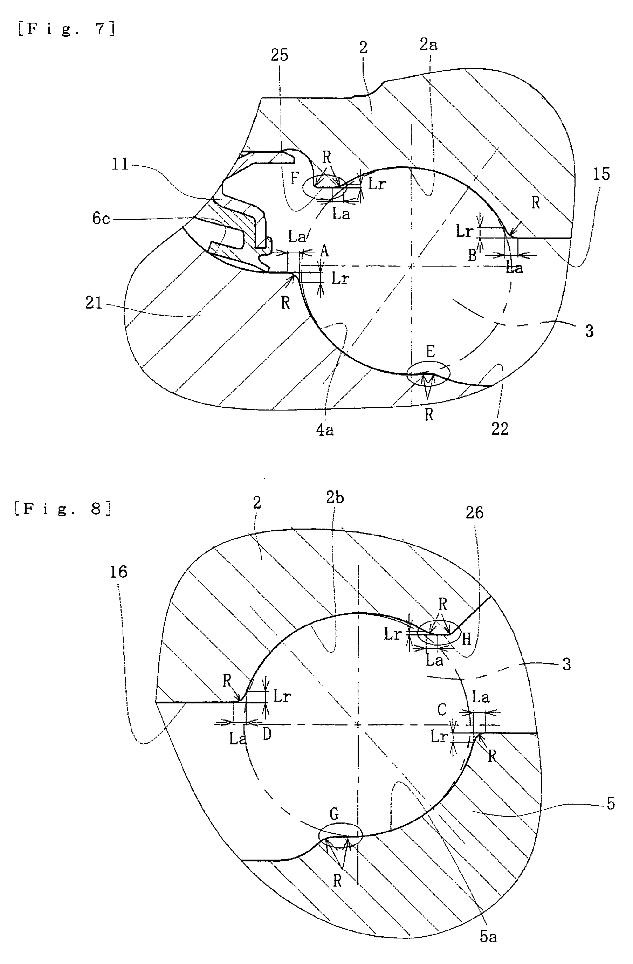

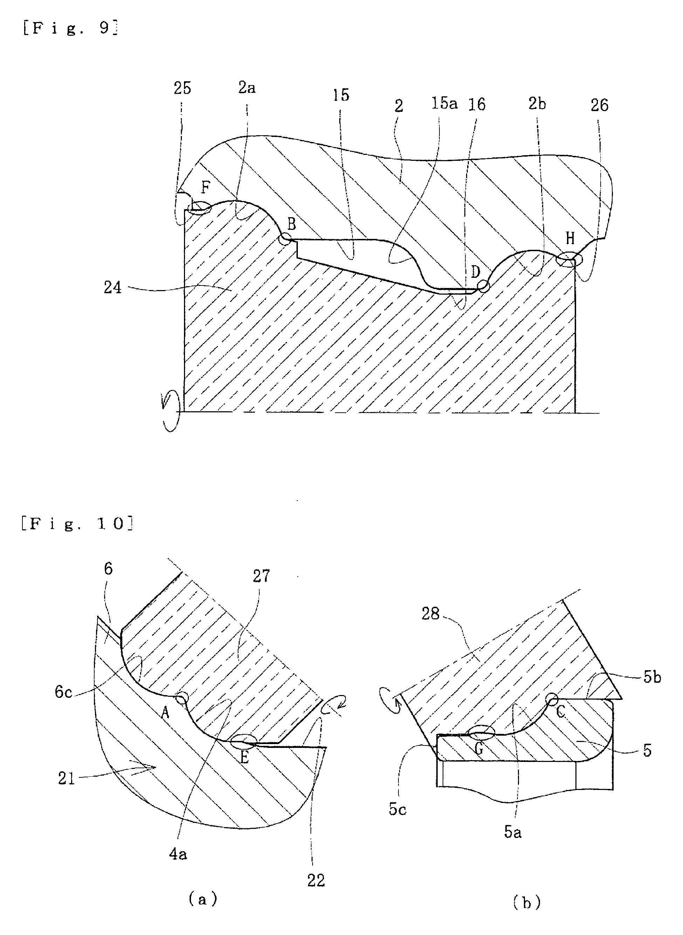

Fig. 6 is a longitudinal section view showing a second embodiment of the bearing apparatus for a wheel of vehicle of the present invention, Fig. 7 is an enlarged sectional view of the bearing row of outer side of Fig. 6, Fig. 8 is an enlarged sectional view of the bearing row of inner side of Fig. 6, Fig. 9 is an explanatory view showing a grinding work applied to the outer member after heat treatment thereof, Fig. 10 (a) is an explanatory view showing a grinding work applied to the hub wheel after heat treatment thereof, and Fig. 10 (b) is an explanatory view showing a grinding work applied to the inner ring after heat treatment thereof. Same reference numerals are used herein for designating same parts as those having same functions used in the first embodiment.

This bearing apparatus is a third generation type used for a driven wheel and comprises an inner member 20, an outer member 2, and double row ball groups 3, 3 freely rollably contained between the outer and inner members 20, 2. The inner member 20 comprises a hub wheel 21, and the inner ring 5 press fitted onto the hub wheel 21 via a predetermined interference.

The hub wheel 21 is integrally formed with a wheel mounting flange 6 at its one end, one (outer side) inner raceway surface 4a on the outer circumferential surface, and a cylindrical portion 4b extending from the inner raceway surface 4a through a shaft shaped portion 22. The hub wheel 21 is made of medium carbon steel including carbon of 0.40 ∼ 0.80% by weight such as S53C and hardened by high frequency induction quenching so that a region including the inner raceway surface 4a from the inner side base 6c of the wheel mounting flange 6 to the cylindrical portion 4b has surface hardness of 58-64 HRC.

Similarly to the first embodiment, a pitch circle diameter PCDo of the outer side ball group 3 is set larger than a pitch circle diameter PCDi of the inner side ball group 3 (PCDo>PCDi). The diameter "d" of each ball 3 is same both in the outer side and inner side and thus the number of the ball group 3 in the outer side is larger than that of the ball group 3 in the inner side because of the fact PCDo > PCDi.

In this embodiment the outer outline configuration of the hub wheel 21 comprises continues from the bottom of the inner raceway surface 4a to the cylindrical portion 4b via the counter portion E, the shaft shaped portion 22 axially extending from the counter portion E, a taper shaped stepped portion 22a, and the shoulder 7b to which the inner ring 5 is abutted. A recess 23 formed deeper than the recess 23 of the first embodiment (shown by a phantom line) is provided at the outer side end portion of the hub wheel 21. The recess 23 is formed substantially along the outer outline configuration of the hub wheel 21 so that the wall thickness of the outer side end portion of the 21 becomes substantially constant. Due to the fact PCDo>PCDi, the diameter of the inner raceway surface 4a of the hub wheel 4 is larger than that of the inner raceway surface 5a of the inner ring 5 and the outer diameter of the shaft shaped portion 22 is set so that it has larger diameter than the bottom diameter of the inner raceway surface 5a of the inner ring 5.

In the bearing apparatus for a wheel of vehicle having such a structure, since the pitch circle diameter PCDo of the outer side ball group 3 is larger than the pitch circle diameter PCDi of the inner side ball group 3 and the number of the outer side ball group 3 is also larger than that of the inner side ball group 3, the rigidity of the bearing apparatus at the outer side can be increased and thus the life of the bearing apparatus can be extended. In addition a recess 23 is formed at the outer side end portion of the hub wheel 21 so that the wall thickness of the hub wheel 21 at this outer side end portion is substantially constant. This enables to solve the antinomic problems of reducing the weight and size of the bearing apparatus and of increasing the rigidity of the bearing apparatus.

Also in this embodiment each raceway surface, the shoulder(base portion) 6c, the shoulder 15, the shoulder (outer diameter of the inner ring) 5b, corners of the shoulder 16A, B, C, D are rounded as having a smooth circular arc and the corners of each raceway surface is also rounded as having a smooth circular arc. The counter portions E, F, G, H denote portions axially opposing to the shoulders 6c, 15, 5b, 16 of the raceway surfaces respectively.

More particularly as shown in Figs. 7 and 8, each corner is formed so that it has the axial chamfer dimension La of 0.15 ∼ 0.8 mm, preferably 0.15 ∼ 0.3 mm, and the radial chamfer dimension Lr of 0.15 ∼ 0.8 mm, preferably 0.15 ∼ 0.3 mm, and the corner radius R of 0.15 ∼ 2.0 R, preferably 0.45 ∼ 0.7 R in order to have smooth transition portions.

As shown in Figs. 9 and 10, the corner portion A-D of shoulders of each inner and outer raceway surface are ground simultaneously with and counter portions E-H after heat treatment by a formed grinding wheel. That is, as shown in Fig. 9, the double row outer raceway surfaces 2a, 2b of the outer member 2 are ground together by the formed grinding wheel 24 and the corners B, D of the shoulders 15, 16 and the counter portions F, H are also simultaneously ground by the formed grinding wheel. The surface roughness of inner circumferential surface 25, 26 of the counter portions F, H is limited less than 3.2 Ra. The term "Ra" means one of roughness parameters defined in JIS (JIS B0601-1994) and is expressed by an arithmetic mean, i.e. a mean of absolute value deviation from an average line. By limiting the surface roughness of the counter portions less than 3.2 Ra, the balls 30 are not damaged by the counter portions F, H although the balls 3 are inserted into the inner circumferential surfaces 25, 26 with being abraded by them during assembling step of balls 3 into the double row outer raceway surfaces 2a, 2b.

Although it is shown that the inner circumferential surfaces 25, 26 of the counter portions F, H are ground by the formed grinding wheels simultaneously with the outer raceway surfaces 2a, 2b, the grinding is not limited to such a method and they may be previously formed by turning. In this case if the turning trace is lead trace or crossing trace, it would be afraid that the balls 3 would be damaged by the turning cross. Accordingly it is preferable that the turning is carried out in accordance with the plunge cutting not the traverse turning or it is also possible to carry out the turning with a slow feeding velocity of bite (less than 0.2 mm/rev). In this case although the lead trace is remained on the turned surface, the height of cutting trace is reduced and thus the surface roughness is improved. Results of the feeding velocity of bite, the surface roughness of the inner circumferential surfaces 25, 26 of the counter portions F, H, and the depth of scratch formed on the surface of ball during assembly of the bearing apparatus are shown in table 1.

**Table 1**

| Feeding velocity of bite | | |
|---|---|---|
| (mm/rev) Surface roughness of inner circumferential surface of counter portion | | |
| Ra (µm) Depth of scratch formed on ball surface (µm) | | |
| 0.3 | 5.8 | 0.6 |
| 0.2 | 3.3 | None |
| 0.1 | 1.6 | None |
| 0.05 | 0.7 | None |

From Table 1 it is clear that the surface roughness of the inner circumferential surfaces 25, 26 of the counter portions F, H becomes less than 3.2 Ra when the feeding velocity of bite is less than 0.2 mm/rev. That is, it will be found that the trace formed by turning is minimized and thus less scratch damage is caused on the ball surface during assembly of the bearing apparatus.

As shown in Fig. 10 (a) the base 6c forming the seal land portion of the wheel mounting flange 6 of the hub wheel 4 and the inner raceway surface 4a are also ground together by the formed grinding wheel 27 and the corner A of the shoulder 6c and the counter portion E are simultaneously ground by the formed grinding wheel 18. Furthermore as shown in Fig. 10 (b) the inner raceway surface 5a, the outer circumferential surface 5b on which the magnetic encoder 12 is press fitted and the end face 5c of the inner ring 5 are ground together by the formed grinding wheel 28 and the corner C of the shoulder 5b is simultaneously ground by the formed grinding wheel 28.

As described above since the corners A-D and the counter portions E-H are simultaneously ground by the formed grinding wheel 24, 27, 28 together with the outer and inner raceway surfaces 2a, 2b, 4a, 5a and thus each of the corners A-D is rounded as a smooth circular arc and the surface roughness of the inner circumferential surfaces 25, 26 of the counter portions F, H are limited less than a predetermined value, it is possible to suppress generation of "edge load" even though the oval contacting region rides over the each corner. Accordingly it is possible to provide a bearing apparatus for a wheel of vehicle which can simultaneously solve the antinomic problems of reducing the weight and size of the bearing apparatus and of increasing the rigidity of the bearing apparatus.

### Third embodiment

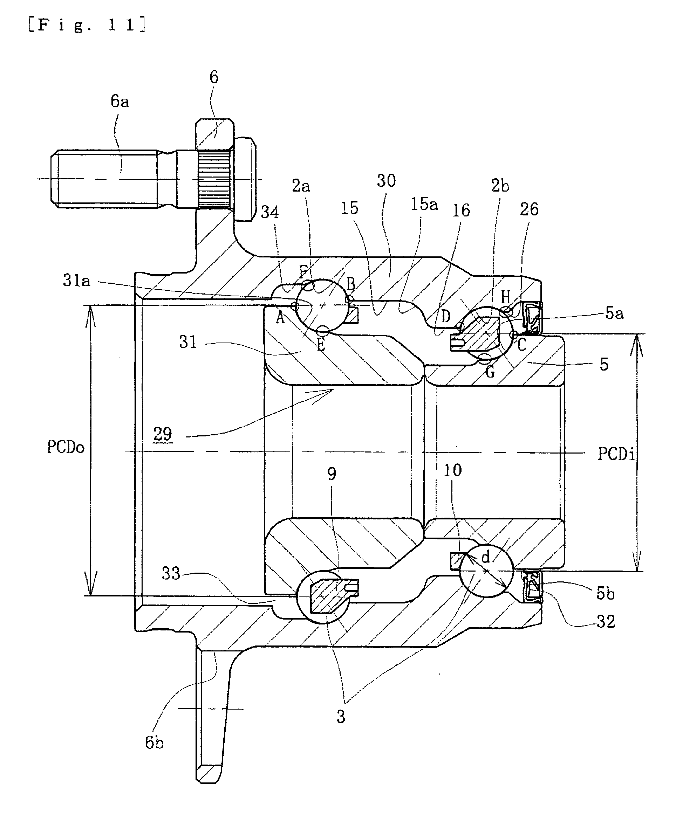

Fig. 11 is a longitudinal section view showing a third embodiment of the bearing apparatus for a wheel of vehicle of the present invention, Same reference numerals are used herein for designating same parts as those having same functions used in the previous embodiments.

This bearing apparatus is a second generation type used for a driven wheel and comprises an inner member 29, an outer member 30, and double row ball groups 3, 3 freely rollably contained between the outer and inner members 29, 30. The inner member 29 comprises a pair of inner rings 31, 5 formed on their outer circumferential surfaces with inner raceway surfaces 31a, 5a.

The outer member 30 is made of medium carbon steel including carbon of 0.40~0.80% by weight such as S53C and integrally formed on its outer circumferential surface with a wheel mounting flange 6 and on its inner circumferential surface with double row outer raceway surfaces 2a, 2b. The double row ball groups 3, 3 are rollably contained between the outer and inner raceway surfaces by cages 9, 10 and forms a back-to-back double row angular contact ball bearing. A seal 32 is mounted on the inner side end portion of the outer member 30 and a labyrinth seal 33 is formed between the outer side end and the inner ring 31. These seals 32, 33 and a cap (not shown) covering the opened end of the outer member 30 prevent leakage of grease contained in the bearing and entering of rain water and dusts into the bearing from outside.

Similarly to the previous embodiments a pitch circle diameter PCDo of the outer side ball group 3 is set larger than a pitch circle diameter PCDi of the inner side ball group 3. The diameter "d" of each ball 3 is same both in the outer side and inner side and thus the number of the ball group 3 in the outer side is larger than that of the ball group 3 in the inner side because of the fact PCDo>PCDi. Due to the fact PCDo > PCDi, the diameter of the outer raceway surface 31a of the outer side inner ring 31 is larger than that of the inner raceway surface 5a of the inner side inner ring 5.

Also similarly to the previous embodiment, since a pitch circle diameter of the outer side ball group is set larger than that of the inner side ball group 3, it is possible to extend the life of the bearing. In addition since the corners A ∼ D of the shoulders and the corners of the counter portions E ∼ H are rounded and formed as smooth circular arcs as well as the surface roughness of the inner circumferential surfaces 34, 26 of the counter portions F, H of the outer member 30 are limited less than 3.2 Ra, it is possible to suppress damages of balls 3 caused by their contact or vibration during assembly of the bearing apparatus. Although the inner circumferential surface 26 of the inner side counter portion H of the inner circumferential surfaces 34, 26 of the counter portions F, H of the outer member 30 is formed by simultaneous grinding of the outer raceway surface 2b after heat treatment, the inner circumferential surface 34 of the outer side counter portion F may be formed by turning before heat treatment.

### Fourth embodiment

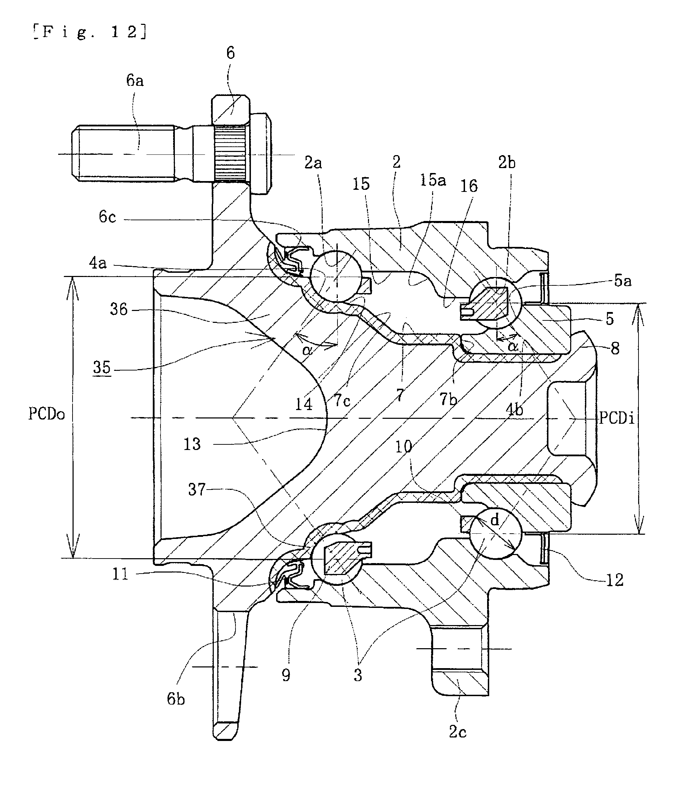

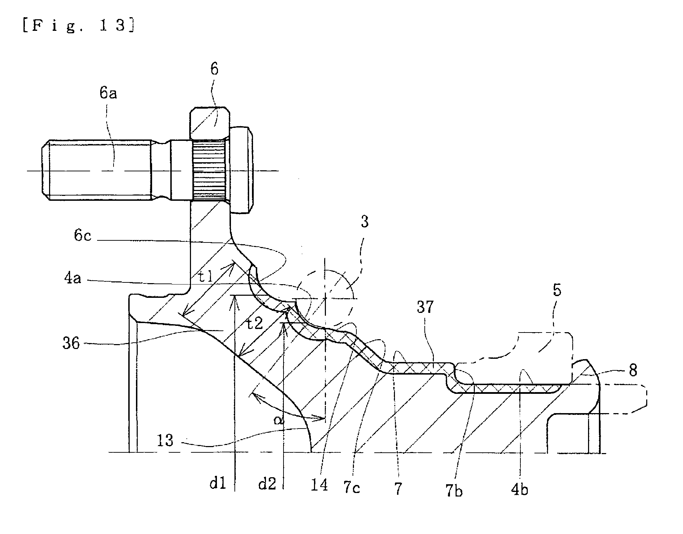

Fig. 12 is a longitudinal section view showing a fourth embodiment of the bearing apparatus for a wheel of vehicle of the present invention, and Fig. 13 is an enlarged view of the hub wheel of Fig. 12. This fourth embodiment is a bearing apparatus in which the wall thickness of the outer side end portion of the hub wheel of the first embodiment (Fig. 1) is defined. Accordingly since this embodiment is different from the first embodiment only in the configuration of the hub wheel, same reference numerals are used herein for designating same parts as those having same functions used in the previous embodiments.

The bearing apparatus for a wheel of vehicle of the present invention is a third generation type used for a driven wheel and comprises an inner member 35, an outer member 2, and double rows of ball groups 3, 3 for rollably contained between the inner and outer members 35, 2. The inner member 35 comprises a hub wheel 36 and an inner ring 5 press fitted on the hub wheel 36 with a predetermined interference.

The hub wheel 36 is integrally formed with a wheel mounting flange 6 at its one end, one (outer side) inner raceway surface 4a on the outer circumferential surface, and a stepped portion 7c extending from the inner raceway surface 4a tapering toward a shaft shaped portion 7 and the cylindrical portion 4b via a shoulder 7b. The hub wheel 36 is made of medium carbon steel including carbon of 0.40 ∼ 0.80% by weight such as S53C and hardened by high frequency induction quenching so that a region including the inner raceway surface 4a from the inner side base 6c of the wheel mounting flange 6 to the cylindrical portion 4b has a hardened layer (shown by cross-hatching) 37 of surface hardness of 53 ∼ 64 HRC.

A substantially conical recess 13 is formed at an outer side end portion of the hub wheel 36 and the depth of the recess 13 extends to near the bottom of the inner raceway surface 4a of the hub wheel 4 so that outer side end portion of the hub wheel 36 has a substantially constant wall thickness. The applicant has noticed that the wall thickness of the hub wheel 36 at a outer side region from a contacting angle "α" (Fig. 12) is important since it is supposed that the hub wheel 36 would be deformed at the contacting angle "α" (α=30~40°) of the outer side ball 3 when a moment load is applied to the wheel mounting flange 6.

As clearly shown in the enlarged view of Fig. 13, the base 6c of the wheel mounting flange 6 is formed as having a circular arc of a predetermined radius of curvature. As a result of the FEM analysis of a relation between a minimum wall thickness t1 at the base 6c and a diameter d1 at a same point in the base 6c, it has found that it is preferable to set the minimum wall thickness t1 so as to satisfy condition 0.2□tl/dl□0.3. This condition enables to achieve reduction of weight of the hub wheel 36 keeping the strength and rigidity of the hub wheel 36. That is when the ratio t1/d1 is less than 20% a desirable rigidity cannot be obtained and thus the deformation of the hub wheel 36 becomes too large. On the contrary when the ratio t1/d1 exceeds 30% the weight of the hub wheel 36 is increased without a large increase of rigidity. For preventing the quenching crack, it is preferable to set the minimum wall thickness t1 of the base 6c more than twice the effective depth of the hardened layer 37. The effective depth of the hardened layer 37 is set within a range 2-5 mm (usually about 3.5 mm).

Similarly to the relation at the base 6c of the wheel mounting flange 6, it is preferable to set a relation between a wall thickness t2 in the direction of contact angle "α" and a diameter (ball contact diameter) d2 at the same point as 0.2 ≤ t2/d2 ≤ 0.3. The minimum wall thickness t2 of that point is set more than twice the effective depth of the hardened layer 37.

According to the bearing apparatus of this embodiment since the recess 13 is formed at the outer side end portion of the hub wheel 36 along the outline of the outer circumferential surface of the hub wheel 36 as well as each wall thickness t1, t2 is set within the predetermined range, it is possible to prevent generation of the quenching crack and thus to provide a bearing apparatus for a wheel of vehicle which can simultaneously solve the antinomic problems of reducing the weight and size of the bearing apparatus and of increasing the rigidity of the bearing apparatus.

### Fifth embodiment

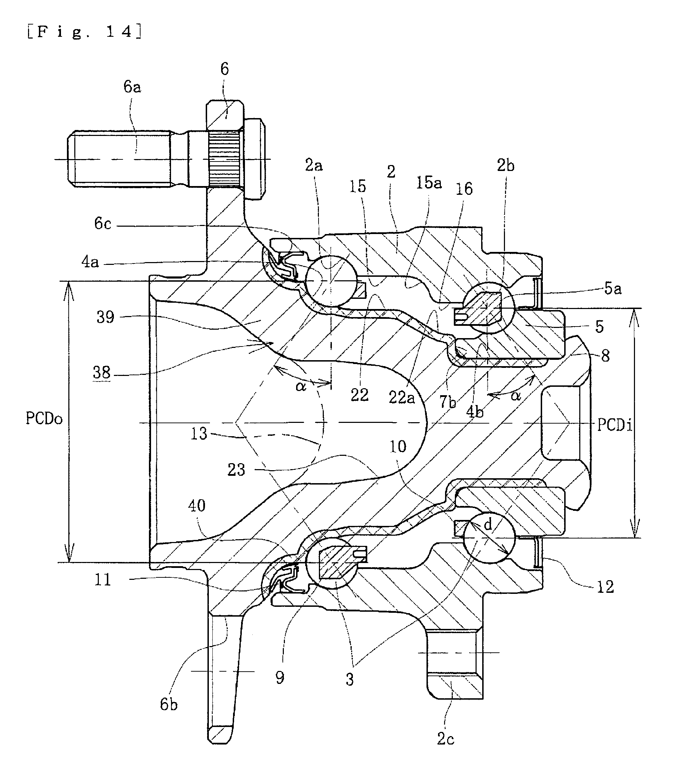

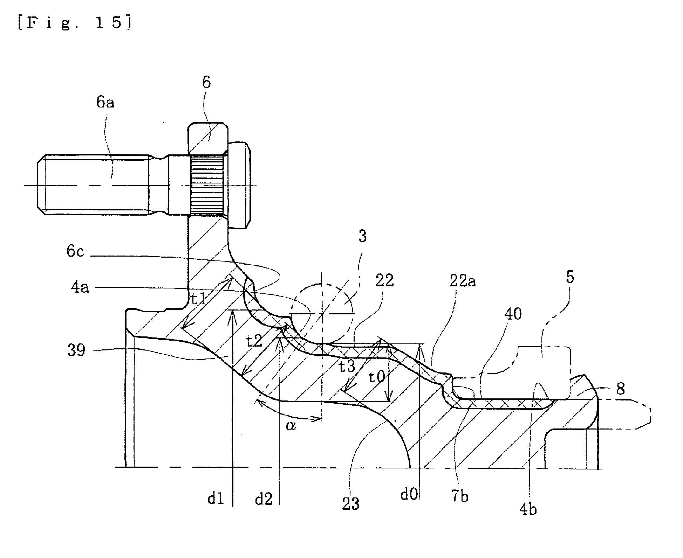

Fig. 14 is a longitudinal section view showing a fifth embodiment of the bearing apparatus for a wheel of vehicle of the present invention, and Fig. 15 is an enlarged view of the hub wheel of Fig. 14. This fifth embodiment is a bearing apparatus in which the wall thickness of the outer side end portion of the hub wheel of the second embodiment (Fig. 4) is defined. Accordingly since this embodiment is different from the first embodiment only in the configuration of the hub wheel, same reference numerals are used herein for designating same parts as those having same functions used in the previous embodiments.

The bearing apparatus for a wheel of vehicle of the present invention is a third generation type used for a driven wheel and comprises an inner member 38, an outer member 2, and double rows of ball groups 3, 3 for rollably contained between the inner and outer members 38, 2. The inner member 38 comprises a hub wheel 39 and an inner ring 5 press fitted on the hub wheel 39 with a predetermined interference.

In this embodiment the hub wheel 39 is formed with a substantially conical recess 23 deeper than the previous recess 13 (shown by a phantom line) at an outer side end portion of the hub wheel 39. The depth of the recess 23 extends to near the stepped portion 22a beyond the bottom of the inner raceway surface 4a so that the wall thickness of the outer side end portion of the hub wheel 39 becomes substantially constant. That is, as shown in an enlarged view of Fig. 15, a minimum wall thickness t1 of the base 6c of the wheel mounting flange 6 and a wall thickness t2 in the direction of contact angle "α" at the inner raceway surface 4a are set larger than a minimum wall thickness (wall thickness at a position of the bottom diameter d0) t0 and the minimum wall thickness t1 of the base 6c and the wall thickness t2 in the direction of contact angle "α" are set within a range 0.2 ∼ 0.3 of their diameters d1, d2 respectively and more than twice the effective depth of the hardened layer 40. In addition since a wall thickness t3 at the bottom of the recess 23 is formed substantially same as the wall thickness t1, t2 at positions outer than the contact angle "α", it is possible to keep the rigidity of the hub wheel 39 and to reduce the weight of the hub wheel 39.

In the previous embodiments, although it is described that the outer diameter each ball 3 is same, balls having different diameters may be used in each row of balls. For example the diameter of each ball arranged at the outer side may be smaller than that of each ball arranged at the inner side to increase the number of ball in the outer side row.

### [Applicability in industries]

The bearing apparatus for a wheel of vehicle of the present invention can be applied to any of the bearing apparatus of the first-fourth generations irrespective for the driving wheel or the driven wheel.

The present invention has been described with reference to the preferred embodiments. Obviously, modifications and alternations will occur to those of ordinary skill in the art upon reading and understanding the preceding detailed description. It is intended that the present invention be construed as including all such alternations and modifications insofar as they come within the scope of the appended claims or the equivalents thereof.

### BRIEF DESCRIPTION OF THE DRAWINGS

Fig. 1 is a longitudinal section view showing a first embodiment of the bearing apparatus for a wheel of vehicle of the present invention;
Fig. 2 is an enlarged sectional view of the bearing row of outer side of Fig. 1;
Fig. 3 is an enlarged sectional view of the bearing row of inner side of Fig. 1;
Fig. 4 is an explanatory view showing a grinding work applied to the outer member after heat treatment thereof;
Fig. 5 (a) is an explanatory view showing a grinding work applied to the hub wheel after heat treatment thereof, and
Fig. 5 (b) is an explanatory view showing a grinding work applied to the inner ring after heat treatment thereof;
Fig. 6 is a longitudinal section view showing a second embodiment of the bearing apparatus for a wheel of vehicle of the present invention;
Fig. 7 is an enlarged sectional view of the bearing row of outer side of Fig. 6;
Fig. 8 is an enlarged sectional view of the bearing row of inner side of Fig. 6;
Fig. 9 is an explanatory view showing a grinding work applied to the outer member after heat treatment thereof;
Fig. 10 (a) is an explanatory view showing a grinding work applied to the hub wheel after heat treatment thereof, and
Fig. 10 (b) is an explanatory view showing a grinding work applied to the inner ring after heat treatment thereof;
Fig. 11 is a longitudinal section view showing a third embodiment of the bearing apparatus for a wheel of vehicle of the present invention;
Fig. 12 is a longitudinal section view showing a fourth embodiment of the bearing apparatus for a wheel of vehicle of the present invention;
Fig. 13 is an enlarged view of the hub wheel of Fig. 12;
Fig. 14 is a longitudinal section view showing a fifth embodiment of the bearing apparatus for a wheel of vehicle of the present invention;
Fig. 15 is an enlarged view of the hub wheel of Fig. 14; and
Fig. 16 is a longitudinal section view showing a bearing apparatus for a wheel of vehicle of the prior art.

1, 20, 29, 35, 38· inner member
2, 30· outer member
2a· outer raceway surface opposite to the inner raceway surface of the hub wheel
2b· inner side outer raceway surface opposite to the inner raceway surface of the inner ring
3· outer side ball
4, 21, 36, 39· hub wheel
4a, 31a· inner raceway surface
5a· inner raceway surface
4b· cylindrical portion
5, 31· inner ring
5b· outer circumferential surface
5c· the end face of the inner ring
6· the wheel mounting flange
6a· hub bolts
6b· circular apertures
6c· inner side base
7, 22· shaft shaped portion
7a, 7b, 7c, 15a, 22a· stepped portion
15, 16· cylindrical shoulder
8· caulked portion
9, 10· cage
11, 32· seal
12· magnetic encoder
13, 23· conical recess
14· counter portion
22· shaft shaped portion
15· shoulders
17, 18, 19, 24, 27, 28· formed grinding wheel
25, 26, 34· inner circumferential surface of the counter portion
33· labyrinth seal
37, 40· hardened layer
50· bearing apparatus for a wheel of vehicle
51· outer member
51a· outer raceway surface of an outer member
51b· outer raceway surface of an inner member
51c· wheel mounting flange
52· hub wheel
52a, 54a· inner raceway surface
52b· cylindrical portion
52c· caulked portion
53· wheel mounting flange
54· inner ring
55· inner member
56. 57· ball
58, 59· cage
60, 61· Seal
62, 64, 65· counter portion
63· stepped portion
A, B, C, D· corner of shoulder
E, F, G, H· counter portion
D1· pitch circle diameter of the outer side ball group
D2· pitch circle diameter of the inner side ball group
d· diameter of each ball
d0· bottom diameter of the inner raceway surface
La· axial chamfer dimension of the corner portion
Lr· radial chamfer dimension of the corner portion
PCDo· pitch circle diameter of the outer side ball group
PCDi· pitch circle diameter of the inner side ball group
R· corner radius
t0· wall thickness at a position of the bottom diameter
t1· minimum wall thickness of the base
t2· wall thickness of the hub wheel in a direction of ball contact angle
t3· wall thickness at the bottom of the recess
α· ball contact angle

## Claims

1. A double row angular contact ball bearing apparatus for a wheel of vehicle comprising an outer member (2, 30) formed on its inner circumferential surface with double row outer raceway surfaces (2a, 2b);
inner members (1, 20, 29, 35, 38) each formed on its outer circumferential surface with double row inner raceway surfaces (4a, 5a, 31a) oppositely arranged to the double row outer raceway surfaces (2a, 2b); and
double row ball groups (3) freely rollably contained between the outer raceway surfaces (2a, 2b) and inner raceway surfaces (4a, 5a, 31a) of the inner members (1, 20, 29, 35, 38) and the outer member (2, 30), wherein a pitch circle diameter (PCDo) of a ball group (3) of the outer side is larger than a pitch circle diameter (PCDi) of a ball group (3) of the inner side, **characterized in that** each of corners (A, B, C, D) of shoulders of the outer and inner raceway surfaces (2a, 2b, 4a, 5a, 31a) is rounded as a smooth circular arc; that chamfered dimensions (La, Lr) of the corner portion (A, B, C, D) of the shoulder is set in a range 0.15mm - 0.8mm; that the corner radius (R) is set in a range 0.15mm - 2.0mm, wherein the transition portion is smoothly formed; and that counter portions (F, H) of the outer raceway surfaces (2a, 2b) are opposing the shoulders (6c, 5b) of the inner raceway surfaces (4a, 5a, 31a) and are rounded as a smooth circular arc and the surface roughness of inner circumferential surfaces (25, 26) is limited less than 3.2 µm Ra.

2. The bearing apparatus for a wheel of vehicle of claim 1, wherein a ratio (d/PCDi) of the outer diameter (d) of each ball (3) to a pitch circle diameter (PCDi) of a ball group (3) away from the wheel mounting flange (6) is set in a range 0.14 ≤ (d/PCDi) ≤ 0.25.

3. The bearing apparatus for a wheel of vehicle of claim 1 or 2 wherein the outer diameter of each ball (3) is same, and the number of ball group (3) near a wheel mounting flange (6) is larger than that of a ball group (3) away from the wheel mounting flange (6).

4. Method of manufacturing the bearing apparatus for a wheel of vehicle of any one of claims 1 to 3, wherein the corner portion (A, B, C, D) of the shoulder or the inner circumferential surface of the counter portion (E, F, G, H) of each inner and outer raceway surface (2a, 2b, 4a, 5a, 31a) is ground simultaneously with the inner and outer raceway surface (2a, 2b, 4a, 5a, 31a) after heat treatment by a formed grinding wheel (17, 18, 19, 24, 27, 28).

## Patentansprüche

1. Zweireihige Schrägkugellagervorrichtung für ein Rad eines Fahrzeugs, umfassend ein äußeres Element (2, 30), das an seiner inneren Umfangsfläche mit zwei Reihen von äußeren Laufringflächen (2a, 2b) ausgeführt ist;
innere Elemente (1, 20, 29, 35, 38), die jeweils an ihrer äußeren Umfangsfläche mit zwei Reihen von inneren Laufringflächen (4a, 5a, 31a) ausgeführt sind, die den zwei Reihen von äußeren Laufringflächen (2a, 2b) gegenüberliegen; und zwei Reihen von Kugelgruppen (3), die frei rollfähig zwischen den äußeren Laufringflächen (2a, 2b) und den inneren Laufringflächen (4a, 5a, 31a) der inneren Elemente (1, 20, 29, 35, 38) und des äußeren Elements (2, 30) enthalten sind, wobei ein Teilkreisdurchmesser (PCDo) einer Kugelgruppe (3) der Außenseite größer als ein Teilkreisdurchmesser (PCDi) einer Kugelgruppe (3) der Innenseite ist,
**dadurch gekennzeichnet, dass**
jede der Ecken (A, B, C, D) der Schultern der äußeren und der inneren Laufringflächen (2a ,2b, 4a, 5a, 31a) als sanfter Kreisbogen abgerundet ist; dass Abschrägungsmaße (La, Lr) des Eckenabschnitts (A, B, C, D) der Schulter auf einen Bereich von 0,15 mm bis 0,8 mm eingerichtet sind; dass der Eckenradius (R) auf einen Bereich von 0,15 mm bis 2,0 mm eingerichtet ist, wobei der Übergangsabschnitt sanft ausgeführt ist; und dass Eckenabschnitte (F, H) der äußeren Laufringflächen (2a, 2b) den Schultern (6c, 5b) der inneren Laufringflächen (4a, 5a, 31a) gegenüberliegen und als sanfter Kreisbogen abgerundet sind und die Oberflächenrauheit der inneren Umfangsflächen (25, 26) auf weniger als 3,2 µm Ra beschränkt ist.

2. Lagervorrichtung für ein Rad eines Fahrzeugs nach Anspruch 1, wobei ein Verhältnis (d/PCDi) des Außendurchmessers (d) jeder Kugel (3) zu einem Teilkreisdurchmesser (PCDi) einer von dem Randanbringungsflansch (6) entfernten Kugelgruppe (3) auf einen Bereich von 0,14 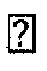 (d/PCDi) 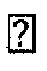 0,25 eingerichtet ist.

3. Lagervorrichtung für ein Rad eines Fahrzeugs nach Anspruch 1 oder 2, wobei der Außendurchmesser jeder Kugel (3) gleich ist, und die Anzahl der Kugelgruppe (3) nahe an einem Radanbringungsflansch (6) größer als jene einer von dem Radanbringungsflansch (6) entfernten Kugelgruppe (3) ist.

4. Verfahren zur Herstellung der Lagervorrichtung für ein Rad eines Fahrzeugs nach einem der Ansprüche 1 bis 3, wobei der Eckenabschnitt (A, B, C, D) der Schulter oder die innere Umfangsfläche des Eckenabschnitts (E, F, G, H) jeder inneren und äußeren Laufringfläche (2a, 2b, 4a, 5a, 31a) gleichzeitig mit der inneren und der äußeren Laufringfläche (2a, 2b, 4a0, 5a, 31a) nach einer Hitzebehandlung mit einer geformten Schleifscheibe (17, 18, 19, 24, 27, 28) geschliffen wird.

## Revendications

1. Appareil de roulement à billes à double rangée et à contact oblique pour la roue d'un véhicule, comprenant un membre extérieur (2, 30), présentant sur sa surface de circonférence intérieure, des surfaces extérieures de chemin de roulement à double rangée (2a, 2b) ; des membres intérieurs (1, 20, 29, 35, 38) présentant chacun, sur sa surface de circonférence extérieure, des surfaces de chemin de roulement à double rangée (4a, 5a, 31a), agencées en opposition des surfaces extérieures de chemin de roulement à double rangée (2a, 2b), et des groupes de billes en deux rangée (3), situés en rotation libre entre les surfaces extérieures de chemin de roulement (2a, 2b) et les surfaces intérieures de chemin de roulement (4a, 5a, 31a) des membres intérieurs (1, 20, 29, 35, 38) et du membre extérieur (2, 30), où le diamètre de cercle primitif (PCDo) d'un groupe de billes (3) du côté extérieur est plus grand que le diamètre de cercle primitif (PCDi) d'un groupe de billes (3) du côté intérieur,
**caractérisé en ce que**
chacun des coins (A, B, C, D) des épaulements des surfaces de chemin de roulement extérieures et intérieures (2a, 2b, 4a, 5a, 31a) est arrondi sous forme d'un arc circulaire lisse ; **en ce que** les dimensions chanfreinées (La, Lr) de la partie de coin (A, B, C, D) de l'épaulement sont ajustées dans une plage allant de 0,15 mm à 0,8 mm ; **en ce que** le rayon du coin (R) est ajusté dans la plage allant de 0,15 mm à 2,0 mm, où la partie de transition est lisse et **en ce que** les parties de coin (F, H) des surfaces extérieures de chemin de roulement (2a, 2b) sont opposées aux épaulements (6c, 5b) des surfaces intérieures de chemin de roulement (4a, 5a, 31a) et sont arrondies sous forme d'un arc circulaire lisse et la rugosité de surface des surfaces intérieures de circonférence (25, 26) est limitée à moins de 3,2 µm Ra.

2. Appareil de roulement pour la roue d'un véhicule selon la revendication 1, où le rapport (d/PCDi) du diamètre extérieur (d) de chaque bille (3) au diamètre de cercle primitif (PCDi) d'un groupe de billes (3) distant du moyeu de la roue (6) est ajusté dans la plage 0,14 ≤ (d/PCDi) ≤ 0,25.

3. Appareil de roulement pour la roue d'un véhicule selon la revendication 1 ou 2, où le diamètre extérieur de chaque bille (3) est identique, et le nombre de groupe de billes (3) près d'un moyeu de roue (6) est supérieur à celui d'un groupe de billes (3) distant du moyeu de roue (6).

4. Procédé de fabrication de l'appareil de roulement pour la roue d'un véhicule selon l'une quelconque des revendications 1 à 3, où la partie en coin (A, B, C, D) de l'épaulement ou la surface intérieure de circonférence de la contrepartie (E, F, G, H) de chacune des surfaces intérieure et extérieure de chemin de roulement (2a, 2b, 4a, 5a, 31a) est meulée simultanément aux surfaces intérieures et extérieures de chemin de roulement (2a, 2b, 4a, 5a, 31a) après traitement thermique par une roue de meulage mise en forme (17, 18, 19, 24, 27, 28).
